# EUROPEAN PATENT SPECIFICATION

(11) **EP 0 597 148 B1**
(45) Date of publication and mention of the grant of the patent: **28.01.1998**
(21) Application number: 92119482.5
(22) Date of filing: 13.11.1992
(51) Int. Cl.: F16J 15/34

(54) **Seal device of the non-contact type**
Dichtungsvorrichtung vom berührungsfreien Typ
Dispositif d'étanchéité de type sans-contact

(43) Date of publication of application: 18.05.1994
(73) Proprietor: NIPPON PILLAR PACKING CO. LTD., Osaka-shi Osaka-fu (JP)
(72) Inventor: Shimizu, Tadayuki, Hyogo-ken (JP); Fuse, Toshihiko, Sanda-shi, Hyogo-ken (JP); Okumachi, Eiji, Kobe-shi, Hyogo-ken (JP)
(74) Representative: Fleuchaus, Leo, Dipl.-Ing.

(56) References cited:
- EP-A- 0 013 678
- EP-A- 0 499 370
- FR-A- 2 342 440

## Description

### 1. Field of the Invention

The present invention relates to a seal device of the non-contact type used for rotary air machines such as the turbine, blower and compressor to limit the amount of liquid leaked through those faces which are perpendicular to a rotating axis, and more particularly, to a seal device according to the preamble of claim 1.

### 2. Prior Art

Such a seal device is for example known from EP-A-0499 370 (EP). Furthermore, Fig. 8 shows a typical one of the conventional seal devices of this non-contact type. In the case of this conventional seal device, dynamic pressure generating spiral grooves 82 are formed in a seal face 81a of a rotating seal ring 81, extending at a certain interval along the circumferential direction of the seal face 81a. When the rotating seal ring 81 is rotated, liquid sealed is forcedly taken in between the seal faces by the pumping action of the spiral grooves 82 in the seal face 81a of the seal ring 81, so that a gap is formed between the seal faces, which are opposed to each other, to keep them not contacted.

In the case of this conventional seal device, however, it is difficult to keep the seal faces stably parallel to each other so as to produce excellent sealing capacity when the seal device is operated at high speed and under high pressure in the gas turbine, compressor or others. In other words, the seal faces are partly contacted with each other, because the gap between them is small, when they are distorted by pressure and heat. The distribution of pressures exerted on them is thus made unbalanced and they are therefore increasingly heated to develop their distortions. They are thus damaged not to produce any sealing capacity.

In order to solve this problem, Japanese Patent Publication Hei 1-22509 (& EP-A-0 013 678) discloses another seal device wherein a rotating seal ring and a stationary ring are designed to have self aligning seal faces. In the case of this another seal device, three parameters such as the depth of each of spiral grooves in the seal face, the rate of the width of the seal face relative to the width of the spiral groove in the radial direction of the seal face and the balance rate are set in such a manner that, when the seal faces are to be distorted, a moment is automatically provided to prevent the seal faces from being distorted and keep them parallel to each other.

In the case of the seal device disclosed in Japanese Patent Publication Hei 1-22509 (& EP-A-0 013 678) and having self aligning seal faces, however, values of three parameters set have some limits, respectively. When the machine is kept not operated, therefore, the seal faces are contacted with each other but when it is operated, dynamic pressure is created to promote the leakage of liquid sealed. This increases the amount of liquid leaked.

The preamble of claim 1 of the present invention is based on EP-0 499 370 which is regarded as the closest prior art and which discloses a mechanical seal device for forward and rearward rotations comprising a first and a second sealing ring which are relatively rotable to each other. This known seal device comprises dynamic pressure generating grooves opening to one edge of a sealing face and a continous annular dam formation being provided between grooved areas and the other edge of said sealing face. In this known seal device each grooved area has at least two trailing edges relative to rotation in one direction, said trailing edges being defined by walls inclined in the plane of the face at an obtuse angle to said one direction of rotation and at least one trailing edge relative to rotation in the opposite direction, said trailing edge being defined by a wall inclined in the plane of the face at an obtuse angle to said opposite direction of rotation; the trailing edges relative to each direction of rotation each being terminated by a transverse wall extending circumferentially of the seal face.

However, EP-0 499 370 says nothing about a self aligning action which, when the seal ring is distorted, prevents the seal ring from being contacted with another seal ring and always holds the seal rings parallel to each other.

### Summary of the Invention

The present invention is therefore intended to eliminate the above-mentioned drawbacks of the prior art seal devices.

Accordingly, an object of the present invention is to provide a seal device of the non-contact type capable of being used at high speed and under high pressure, preventing the balance of pressures from being lost when seal faces are distorted by the pressure of liquid sealed and by heat created, reducing the amount of liquid leaked between the seal faces, and eliminating any fear that the seal faces are damaged.

Another object of the present invention is to provide a seal device of the non-contact type capable of effectively creating averaged dynamic pressure by the whole of the seal face.

These objects of the present invention can be achieved by a seal device according to claim 1.

According to the seal device of the non-contact type of the present invention, high pressure liquid can be taken in by dynamic pressure generating spiral grooves in the seal face to keep the seal faces stably parallel to each other. Even when the machine is operated at high speed and under high pressure, therefore, the seal faces can be made stable. Further, when the seal faces are to be distorted by pressure and heat, a moment to correct their tiltings can be created by the pumping action of the spiral grooves to thereby reliably prevent them from being contacted with each other. Still further, the amount of liquid leaked because of the difference of pressures exerted on them can be reduced by the pumping action of inverted grooves. Still further, dusts in the air, oil mist in bearings, and others are not allowed to enter into the spiral and inverted grooves because the inverted groove continuous from the front end of each of the spiral grooves is closed at its front end. The seal faces are therefore not damaged by these dusts, oil mist and others entered. This enables the seal device to produce certain sealing capacity even when it is used for a long time. The reliability of the seal device according to the present invention can be thus enhanced.

Even when one of the seal faces is inwardly or outwardly distorted or both of them are to be distorted by heat, therefore, the distribution of pressures exerted on them can be kept balanced to reliably prevent them from being contacted with each other.

Furthermore, these may be thus create enough dynamic pressure and it can be exerted equally on the whole of each seal face. This reliably prevents the seal faces from being contacted with each other.

These and other objects as well as merits of the present invention will become apparent from the following detailed description.

### Brief Description of the Drawings

Fig. 1 is an enlarged and vertically-sectioned view showing the main portion of the seal device of the non-contact type according to an embodiment of the present invention;
Fig. 2 is a front view showing a seal face of the rotating seal ring;
Fig. 3 is a view showing the dimensional relation between the spiral and the inverted groove when they are measured in the radial direction of the seal face;
Fig. 4 is a view showing the distribution of pressures exerted on the seal faces when these seal faces are not distorted;
Fig. 5 is a view showing the distribution of pressures seen when one of the seal faces is inwardly distorted;
Fig. 6 is a view showing the distribution of pressures seen when one of the seal faces is outwardly distorted;
Fig. 7 is a view showing the distribution of pressures seen when the width of the spiral and inverted grooves in the radial direction of the seal face is set in a certain range; and

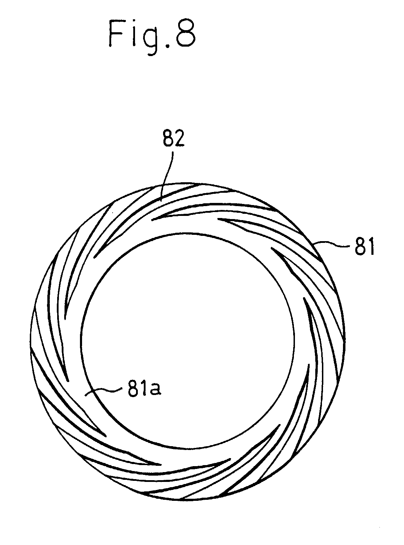

Fig. 8 shows a seal face of the conventional seal device of the non-contact type.

### Detailed Description of the Preferred Embodiment

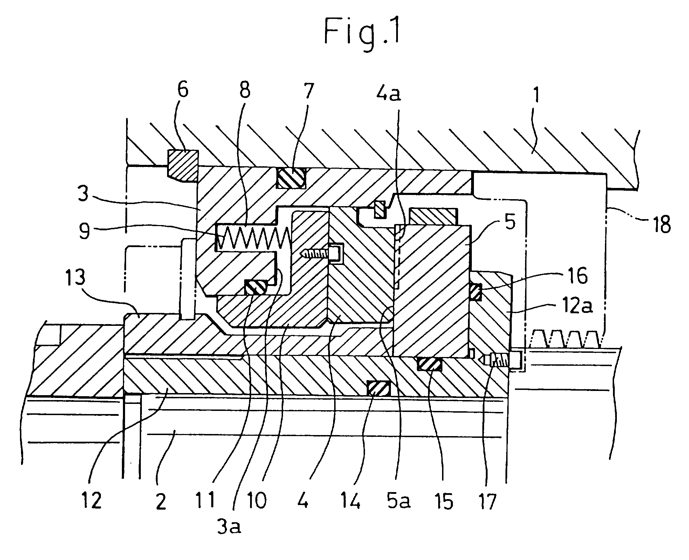

Fig. 1 is an enlarged and vertically-sectioned view showing a main portion of the seal device of the non-contact type according to an embodiment of the present invention. In Fig. 1, reference numeral 1 represents a casing, 2 a rotating shaft passed through the casing 1, and 3 a ring fixed to the inner wall of the casing 1. Reference numeral 4 denotes a stationary ring supported by the fixed ring 3 and provided with an end face 4a perpendicular to the axis of the rotating shaft 2. Reference numeral 5 denotes a seal ring arranged round the rotating shaft 2 and rotating together with it. This rotating seal ring 5 has an end face 5 opposed to the end face 4a of the stationary ring 4 and perpendicular to the axis of the rotating shaft 2. Both end faces 4a and 5a of these rings 4 and 5 which are opposed to each other serve as sealing faces.

The fixed ring 3 is positioned relative to the casing 1 in the axial direction thereof by a stopper member 6, for example, and an O-ring 7 seated on the outer circumference of the fixed ring 3 seals the casing 1. Plural blind holes 8 are formed on the inner face of that portion 3a of the fixed ring 3 which is perpendicular to the axis of the fixed ring 3 and they are separated from their adjacent ones by a certain interval in the circumferential direction of the fixed ring 3. Each of the blind holes 8 holds a spring member 9 therein, by which the stationary ring 4 is urged in the axial direction of the casing 1 through a disk 10, L-shaped in section and contacted with and fixed to the stationary ring 4. An O-ring 11 is interposed between the fixed ring 3 and the disk 10 to establish sealing between them.

Reference 12 represents a first sleeve fitted onto the rotating shaft 2 and reference numeral 13 denotes a second sleeve fitted onto the first sleeve 12. The rotating seal ring 5 is positioned in the axial direction of the rotating shaft 2 by a flange 12a of the first sleeve 12 and the second sleeve 13. Reference numeral 14 represents an O-ring for preventing liquid, for example, in the casing 1 from leaking between the first sleeve 12 and the rotating shaft 2. Reference numerals 15 and 16 represent O-rings for preventing the liquid in the casing 1 from leaking between the rotating seal ring 5 and the first sleeve 12. Reference numeral 17 denotes a pin for stopping the first sleeve 12 from rotating relative to the rotating shaft 2. Reference numeral 18 denotes an auxiliary labyrinth seal.

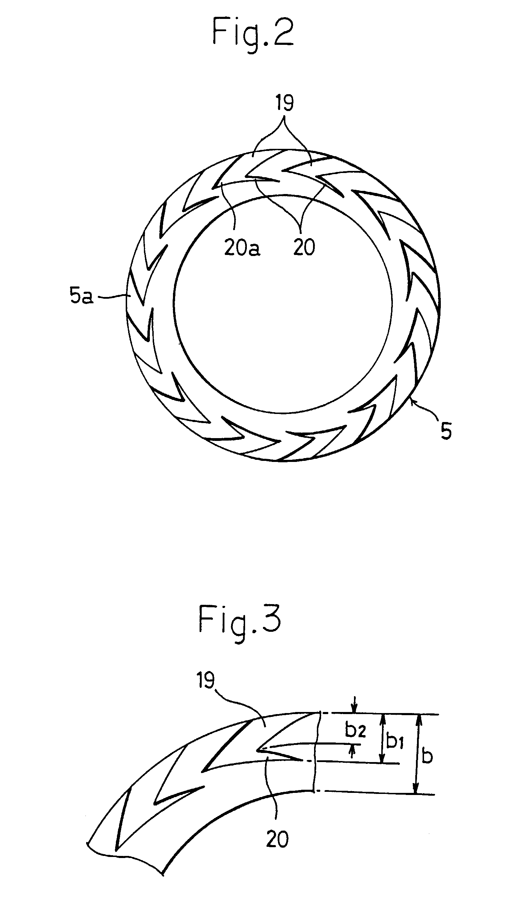

As shown in Fig. 2, a plurality of dynamic pressure generating grooves 19 are formed in the seal face 5a of the rotating seal ring 5, each extending in a spiral from the outer circumferential rim of the ring 5 to the inner one thereof. It is preferable that each dynamic pressure generating spiral groove 19 has a depth, ranging from 2µm to 20µm, into the seal face 5a of the seal ring 5. A further groove 20 extends continuous from the front end of each groove 19 in a direction along the circumferential direction of the ring 5 but across the direction in which each groove 19 extends. This inverted groove 20 becomes narrower as it comes nearer to its front end, and it is finally closed at its front end, as shown in Fig. 2.

When the rotating shaft 2 is rotated in the case of the above-described seal device of the non-contact type, the rotating seal ring is thus rotated. As the dynamic pressure generating spiral grooves 19 are formed in the seal face 5a of the rotating seal ring 5, the liquid is forcedly introduced between the seal faces 4a and 5a of the rings 4 and 5 thanks to the pumping action of the grooves 19. As the result, a film of the liquid having a certain sealing pressure is held between the seal faces 4a and 5a to allow a desired amount of the liquid to be leaked through the small gap between them.

Even when the pressure of the liquid sealed changes, loads exerted on the stationary ring 4 and the disk 10 can be kept balanced to enable the machine to be stably operated.

Even when the seal faces 4a and 5a are distorted by the pressure of the liquid sealed and by heat caused under high speed operation of the machine to bring distributions of pressures relative to the faces 4a and 5a unbalanced, a moment round the center of rotation can be obtained by pressure, largest, caused at and in the vicinity of each of the closed front ends 20a of the inverted grooves 20 continuous from the fronts of the dynamic pressure generating spiral grooves 19. The seal faces 4a and 5a can be thus kept parallel to each other. In addition, the amount of liquid leaked can be kept as small as possible by the pumping action of the inverted grooves 20 because this pumping action acts in the direction in which the liquid leaked between the seal faces 4a and 5a is pushed back.

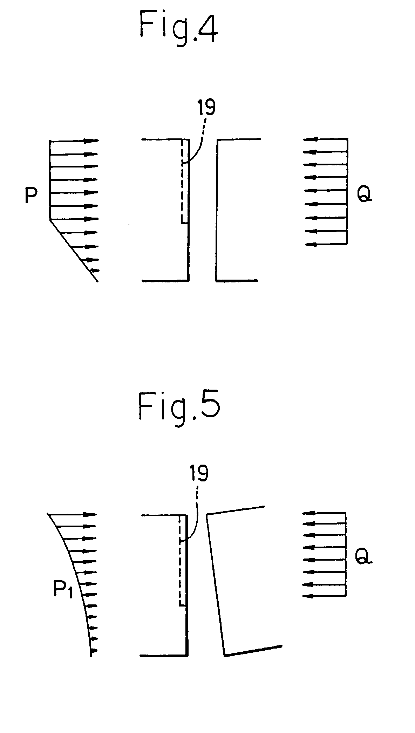

When the seal faces 4a and 5a are not distorted by the pressure and the heat, the distribution of pressures is as shown in Fig. 4, but it depends upon a width b₁ of the spiral and inverted grooves 19 and 20 and upon a width b₂ of the spiral groove 19 in the radial direction of the seal face 5a (see Fig. 3).

Providing that the width of the seal face 5a in the radial direction thereof is b, that the one of the spiral and inverted grooves 19 and 20 is b₁, and that the one of the spiral groove 19 is b₂, it is preferable to set b₁/b in a range of 0.5 - 0.7. The reason is as follows: In a case of b₁/b< 0.5, pressure caused by the spiral and inverted grooves 19 and 20 in the seal face 5a of the rotating seal ring 5 is small and it acts only on narrow areas of the seal faces 4a and 5a along their outer circumferential rims. It is therefore not enough to keep the seal faces 4a and 5a not contacted.

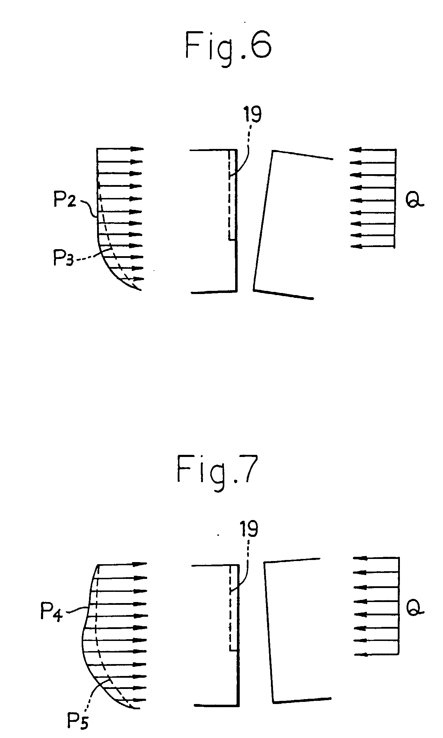

When the stationary seal ring 4 is inwardly distorted as shown in Fig. 5 in a case of b₁/b > 0.7, the distribution of pressures becomes P₁ < Q, thereby making the gap between the seal faces 4a and 5a so small as to bring them contacted. When the stationary seal ring 4 is outwardly distorted as shown in Fig. 6, the distribution of pressures becomes P₂>Q, thereby making the gap large. P₂ is thus made P₃ equal to Q.

When b₁/b is in the range of 0.5 - 0.7 as described above, therefore, the distribution of pressures becomes P₄ > Q, as shown in Fig. 7, in the case where the stationary seal ring 4 is inwardly distorted, thereby making the gap between the seal faces 4a and 5a large, and the distribution of pressures becomes P₅ = Q in the case where the stationary seal ring 4 is outwardly distorted. In other words, the distribution of pressures exerted on the seal faces 4a and 5a can be kept balanced even when the stationary seal ring 4 is either inwardly or outwardly distorted, thereby more reliably preventing the seal faces 4a and 5a from being contacted.

It is preferable to set b₂/b₁ in a range of 0.6 - 0.7. The reason is as follows: In a case of b₂/b₁ < 0.6, the dynamic pressure generating action of the spiral grooves 19 is not enough to obtain a pressure so large as to keep the seal faces 4a and 5a not contacted. When the stationary seal ring 4 is inwardly distorted in a case of b₂/b₁ > 0.7, the distribution of pressures is made unbalanced, thereby causing the gap between the seal faces 4a and 5a to be made so small that they are contacted with each other.

The front end of each inverted groove 20 is closed. This prevents dusts in the air and oil mist in bearings from being introduced between the stationary and rotating seal rings 4 and 5, thereby causing no fear that their seal faces 4a and 5a are damaged by these dusts and oil mist.

Although the spiral and inverted grooves 19 and 20 have been formed in the seal face 5a of the rotating seal ring 5 in the above-described case, they may be formed in the stationary seal ring 4.

Further, it is not needed that each inverted groove 20 is tapered as described above. It may have any of other optional shapes, if necessary.

## Claims

1. Seal device of the non-contact type comprising a casing (1), a rotating shaft (2) passed through the casing, a seal ring (5) arranged between the outer circumference of the rotating shaft (2) and the inner circumference of the casing (1) and rotated together with the rotating shaft (2), a stationary ring (4) arranged between the outer circumference of the rotating shaft (2) and the inner circumference of the casing (1) and held by the casing (1), and seal faces (5a, 4a) formed by those end faces of the rotating seal ring (5) and the stationary ring (4) which are opposed to each other and which are perpendicular to axes of the rotating seal ring (5) and the stationary ring (4), respectively, wherein dynamic pressure generating spiral grooves (19) are formed in one of the seal faces at a certain interval, extending from the outer circumferential rim of the seal face in the radial direction thereof, wherein an inverted groove (20) is further formed continuous from the front end of each of the spiral grooves (19), extending along the circumferential direction of the seal face but across its corresponding spiral groove (19) and having a closed front end, and wherein each of the inverted grooves (20) is tapered, becoming narrower as it comes nearer to its front end,
**characterized in that**
the rate of the width (b) of the seal face in the radial direction thereof relative to the width (b1) of the dynamic pressure generating grooves (19) and the inverted grooves (20) also in the radial direction of the seal face is set in a range of 0.5 ≤ (b1/b) ≤ 0.7 and/or that the rate of the width (b1) of the dynamic pressure generating groove (19) and the inverted groove (20) in the radial direction of the seal face relative to the width (b2) of the dynamic pressure generating groove (19) alone in the same direction is set in a range of 0.6 ≤ (b2/b1) ≤ 0.7.

2. The seal device of the non-contact type according to claim 1, wherein the dynamic pressure generating spiral grooves (19) and their inverted grooves (20) are formed in the seal face (5a) of the rotating seal ring (5).

3. The seal device of the non-contact type according to claim 1, wherein the dynamic pressure generating spiral grooves (19) and their inverted grooves (20) are formed in the seal face (4a) of the stationary ring (4).

## Patentansprüche

1. Dichtungsvorrichtung vom berührungsfreien Typ, die beinhaltet: ein Gehäuse (1), eine Drehwelle (2), die durch das Gehäuse läuft, einen Dichtring (5), der zwischen dem äußeren Umfang der Drehwelle (2) und dem inneren Umfang des Gehäuses (1) angeordnet ist und sich zusammen mit der Drehwelle (2) dreht, einen stationären Ring (4), der zwischen dem äußeren Umfang der Drehwelle (2) und dem inneren Umfang des Gehäuses (1) angeordnet ist und vom Gehäuse (1) gehaltert wird, und Dichtflächen (5a, 4a), die von den einander gegenüberliegenden Endflächen des rotierenden Dichtrings (5) und des stationären Rings (4) gebildet werden und jeweils senkrecht zur Achse des rotierenden Dichtring (5) und des stationären Rings (4) liegen, wobei dynamischen Druck erzeugende Spiralrillen (19) in einer der Dichtflächen in bestimmtem Abstand ausgebildet sind und sich vom äußeren Umfang der Dichtfläche in radialer Richtung erstrecken, wobei ferner eine umgekehrte Rille (20) kontinuierlich vom vorderen Ende jeder Spiralrille (19) aus ausgebildet ist und sich entlang des Umfangs der Dichtfläche, aber quer zu den entsprechenden Spiralrillen (19) erstreckt und ein geschlossenes vorderes Ende hat, und wobei jede umgekehrte Rille (20) konisch zuläuft und gegen das vordere Ende zu immer enger wird,
dadurch gekennzeichnet, daß
der Betrag der Breite (b) der Dichtfläche in radialer Richtung relativ zur Breite (b₁) der den dynamischen Druck erzeugenden Rillen (19) und der umgekehrten Rillen (20) auch in radialer Richtung der Dichtfläche im Bereich von 0,5 ≤ (b₁/b) ≤ 0,7 liegt und/oder der Wert der Breite (b₁) der den dynamischen Druck erzeugenden Rille (19) und der umgekehrten Rille (20) in radialer Richtung der Dichtfläche relativ zur Breite (b₂) der den dynamischen Druck erzeugenden Rille (19) allein in gleicher Richtung im Bereich von 0,6 ≤ (b₂/b₁) ≤ 0,7 liegt.

2. Eine Dichtungsvorrichtung vom berührungsfreien Typ gemäß Anspruch 1, wobei die den dynamischen Druck erzeugenden Rillen (19) und ihre umgekehrten Rillen (20) in der Dichtfläche (5a) des rotierenden Dichtrings (5) ausgebildet sind.

3. Eine Dichtungsvorrichtung vom berührungsfreien Typ gemäß Anspruch 1, wobei die den dynamischen Druck erzeugenden Rillen (19) und ihre umgekehrten Rillen (20) in der Dichtfläche (4a) des stationären Rings (4) ausgebildet sind.

## Revendications

1. Dispositif d'étanchéité du type sans-contact contenant un carter (1), un arbre rotatif (2) qui passe par le carter, un joint ou bague d'étanchéité (5) disposé entre la circonférence extérieure de l'arbre rotatif (2) et la circonférence intérieure du carter (1) et mis à tourner en même temps que l'arbre rotatif (2), un joint ou bague fixe (4) disposé entre la circonférence extérieure de l'arbre rotatif (2) et la circonférence intérieure du carter (1) et maintenu par le carter (1), et des faces d'étanchéité (5a, 4a) formées par ces faces d'extrémité du joint ou bague d'étanchéité rotatif (5) et du joint ou bague fixe (4) qui sont mutuellement opposés et qui sont perpendiculaires aux axes du joint ou bague d'étanchéité rotatif (5) et du joint ou bague fixe (4), respectivement, dans lequel des rainures en spirale de génération de pression dynamique (19) sont formées dans une des faces d'étanchéité à un certain intervalle, s'étendant à partir du bord circonférentiel extérieur de la face d'étanchéité dans sa direction radiale, dans lequel une rainure inversée (20) est, de plus, formée en continu à partir de l'extrémité avant de chacune des rainures en spirale (19), s'étendant le long de la direction circonférentielle de la face d'étanchéité mais à travers sa rainure en spirale correspondante (19) ayant une extrémité avant fermée, et dans lequel chacune des rainures inversées (20) est effilée ou conique, devenant plus étroite à mesure qu'elle s'approche de son extrémité avant,
caractérisé en ce que
le rapport de la largeur (b) de la face d'étanchéité dans sa direction radiale par rapport à la largeur (b1) des rainures de génération de pression dynamique (19) et des rainures inversées (20) également dans la direction radiale de la face d'étanchéité est établi dans une plage de 0,5 ≤ (b1/b) ≤ 0,7 et/ou en ce que le rapport de la largeur (b1) de la rainure de génération de pression dynamique (19) et de la rainure inversée (20) dans la direction radiale de la face d'étanchéité par rapport à la largeur (b2) de la rainure de qénération de pression dynamique (19) seule dans la même direction est établi dans une plage de 0,6 ≤ (b2/b1) ≤ 0,7.

2. Dispositif d'étanchéité du type sans-contact selon la revendication 1, dans lequel les rainures en spirale de génération de pression dynamique (19) et leurs rainures inversées (20) sont formées dans la face d'étanchéité (5a) du joint ou bague d'étanchéité rotatif (5).

3. Dispositif d'étanchéité du type sans-contact selon la revendication 1, dans lequel les rainures en spirale de génération de pression dynamique (19) et leurs rainures inversées (20) sont formées dans la face d'étanchéité (4a) du joint ou bague fixe (4).
